# EUROPÄISCHE PATENTSCHRIFT

(11) **EP 3 269 226 B1**
(45) Veröffentlichungstag und Bekanntmachung des Hinweises auf die Patenterteilung: **17.04.2019**
(21) Anmeldenummer: 17181069.0
(22) Anmeldetag: 12.07.2017
(51) Int. Cl.: A01D 45/00

(54) **FAHRZEUG ZUM STECHEN VON SPARGEL IM FAHREN**
VEHICLE FOR CUTTING ASPARAGUS WHILE DRIVING
VÉHICULE DE CUEILLETTE D'ASPERGES EN ROULANT

(30) Priorität: 13.07.2016 DE 102016112905
(43) Veröffentlichungstag der Anmeldung: 17.01.2018
(73) Patentinhaber: SOFT CONTROL GmbH Automatisierungstechnik, 64291 Darmstadt (DE); Böckenhoff, Bernhard, 46348 Raesfeld-Erle (DE)
(72) Erfinder: Nold, Stefan, 64291 Darmstadt (DE)
(74) Vertreter: Katscher Habermann Patentanwälte

(56) Entgegenhaltungen:
- EP-A1- 2 668 837
- EP-A1- 2 754 343
- DE-A1-102007 008 330
- DE-A1-102009 011 368
- DE-U1-202009 005 890
- US-A- 4 064 682

## Beschreibung

Die Erfindung betrifft ein Fahrzeug zum Stechen von Spargel im Fahren mit einem Fahrwerk und mindestens einer Stechvorrichtung mit einem Stechwerkzeug, das dazu eingerichtet ist, eine Stechbewegung quer zu einer Fahrtrichtung des Fahrzeugs durchzuführen.

Bei Spargel handelt es sich um eine Nutzpflanze, die gewöhnlicherweise in einem Damm aufgehäufter Erde angebaut wird. Die Spargeltriebe wachsen in dem Damm nach oben und die Ernte beginnt, sobald die Spargeltriebe die Dammkrone durchbrechen. Spargel wird üblicherweise in Handarbeit so geerntet, dass die Spargeltriebe freigelegt werden und anschließend mit einem Stechmesser abgeschnitten werden. Der Stand der Technik kennt verschiedene Ansätze, um diesen arbeitsaufwändigen Vorgang zu automatisieren.

So beschreibt die Gebrauchsmusterschrift DE 203 08 242 U1 eine Vorrichtung, die einen Damm inklusive des darin enthaltenen Spargels abträgt. Hierdurch ergeben sich unterschiedliche Spargellängen, die nur mit großen Preisabschlägen zu vermarkten sind. Die Offenlegungsschrift DE 43 19 085 A1 beschreibt eine Spargelstechmaschine, bei der zwei Stechmesser im Ruhezustand in den Furchen links und rechts neben dem Spargeldamm angeordnet sind und beim Stechen mittels eines Schwenkhebelmechanismus von hydraulischen oder pneumatische Zylindern nach innen bewegt werden. Hierzu muss die Furche relativ breit sein und die Betätigung ist energieintensiv. Eine Ernte während der Fahrt ist nicht möglich.

In der Patentschrift DE 10 2013 019 036 B3 wird ein Stechverfahren vorgeschlagen, bei dem ein bogenförmiges Messer durch einen quer zu einem Damm angeordneten Linearmotor zur Dammmitte gezogen wird und den Spargel durchtrennt. Linearmotoren haben zwar einen geringen Energieverbrauch, aber sie sind auch sehr teuer. Es besteht ferner der Nachteil, dass das Messer das Erdreich im Damm in Fahrtrichtung teilweise durchschneiden muss, was zur Abnutzung des Messers führt und einen zusätzlichen Energieaufwand erfordert. Die erforderlichen Stechkräfte können nur mit sehr hohem Aufwand erzeugt werden.

In den Offenlegungsschriften DE 10 2007 008 330 A1 und EP 1 958 494 A1 wird ein Gelenkroboter vorgeschlagen, der die Spargeltriebe erntet. Somit muss das Erntefahrzeug während des Stechens nicht anhalten. Diese Lösung ist konstruktiv und aus regelungstechnischer Sicht jedoch vergleichsweise aufwändig.

Ein Verfahren zur Ansteuerung von quer zum Damm angeordneten Stechwerkzeugen im Fahren ist aus der Patentschrift DE 10 2012 022 569 B3 bekannt. Es wird jedoch auch hier keine konstruktive Lösung bereitgestellt, die das Ernten während der Fahrt erleichtert.

Die Aufgabe der vorliegenden Erfindung ist es deshalb, ein Fahrzeug zur Spargelernte bereitzustellen, das eine Spargelernte während der Fahrt durch einen vorteilhaften konstruktiven Aufbau ermöglicht.

Die Aufgabe wird gelöst durch ein eingangs genanntes Fahrzeug zum Stechen von Spargel nach Anspruch 1, das erfindungsgemäß so ausgebildet ist, dass die Stechvorrichtung mit einem Pendelstab verbunden ist, der um eine Pendelachse verschwenkbar am Fahrwerk gelagert ist, sodass die Stechvorrichtung in der Fahrtrichtung des Fahrzeugs verschwenkbar ist. Die Stechvorrichtung weist ein Stechwerkzeug auf, das dazu geeignet ist, seitlich in einen Damm hineinzustechen, einen Spargeltrieb zu durchtrennen und das umliegende Erdreich so zu lockern, dass der Spargel manuell oder mit Hilfe einer Entnahmevorrichtung ohne großen Kraftaufwand entnommen werden kann.

Ist das Fahrzeug in Bewegung, während sich das Stechwerkzeug im Damm befindet, so wird der Pendelstab aufgrund der Reibungskräfte im Damm entgegengesetzt zu der Fahrtrichtung ausgeschwenkt. Die Verschwenkungsrichtung der Pendelachse muss dabei nicht exakt in der Fahrtrichtung liegen sondern kann davon auch in einem Toleranzbereich von bis zu 20° abweichen. Als Fahrtrichtung wird die Richtung bezeichnet, in der sich das Fahrzeug entlang des Damms bewegt. Die Verschwenkung des Pendelstabs bewirkt, dass das Stechwerkzeug bei der Fahrt seine Geschwindigkeit anpasst. Während das Fahrzeug seine Geschwindigkeit beibehält, verlangsamt sich die Bewegung des Stechwerkzeugs in Fahrtrichtung oder wird sogar vollkommen abgebremst, nachdem das Stechwerkzeug in den Damm eingedrungen ist. Dadurch wird es vermieden, dass das Stechwerkzeug das Dammmaterial in Fahrtrichtung durchschneidet. Die Kräfte auf das Stechwerkzeug in Richtung des vorwärts fahrenden Fahrzeugs sind somit sehr gering, sodass das Fahrzeug schlank und leicht ausgeführt werden kann.

Sobald das Stechwerkzeug wieder aus dem Damm entfernt worden ist, kann es durch eine Verschwenkung des Pendelstabs wieder eine seine ursprüngliche Ausrichtung ausnehmen. Erfindungsgemäß ist es nicht notwendig, dass das Fahrzeug seine Geschwindigkeit anpasst, da aufgrund der Verschwenkungsbewegung des Pendelstabs eine Anpassung der Geschwindigkeit des Stechwerkzeugs trotzdem erfolgt.

Das Fahrzeug kann batteriebetrieben ausgestaltet sein. Bevorzugt ist auf dem Fahrzeug mindestens ein Solarpanel zur Batteriespeisung vorgesehen. Durch das mindestens eine Solarpanel wird die Reichweite des Fahrzeugs deutlich erhöht. An sonnigen Tagen kann ein Nachladen der Batterien vollständig entfallen. Aufgrund der Solarzellen werden die Batterien nicht vollständig entladen, wodurch sich ihre Lebensdauer erheblich verlängert. Zusätzlich bietet das mindestens eine Solarpanel dem Erntehelfer einen guten Sonnenschutz. Das Erntegut kann im Schatten der Panels und damit kühl gelagert werden. Am Fahrwerk ist vorzugsweise mindestens ein federnd gelagertes Element vorgesehen, das so eingerichtet ist, dass es den Damm beim Entlangfahren nach dem Stechvorgang verschließt. Dazu kann das Blech erfindungsgemäß in einem Winkel von 0° bis 45° zur Fahrtrichtung ausgerichtet sein und so am Fahrwerk vorgesehen sein, dass es entlang des Damms verläuft. Das Fahrzeug weist vorzugsweise Lenkrollen auf, die so ausgebildet sind, dass sie das Fahrzeug in der Spur halten.

Die mindestens eine Stechvorrichtung kann gemäß einer besonderen Ausführungsform der Erfindung abnehmbar am Fahrwerk befestigt sein. Erfindungsgemäß schneidet das Fahrzeug die Spargeltriebe im Damm. Die abgeschnittenen Spargeltriebe können dann von einem Erntehelfer eingesammelt werden. Alternativ können die Spargeltriebe auch vom Fahrzeug aus dem Damm entnommen werden.

Gemäß einer besonders bevorzugten Ausführungsform ist das Fahrzeug so ausgeführt, dass es einen Erntevorgang auch durchführen kann, wenn über dem Damm ein Minitunnel angeordnet ist. Ein Minitunnel umfasst eine den Damm tunnelartig überspannende Folie, die der Ernteverfrühung dient. Der Minitunnel weist Stützelemente zum Tragen der Folie auf. Das Fahrzeug ist vorzugsweise so breit ausgeführt, dass sich alle Komponenten des Fahrzeugs außerhalb eines Bereichs befinden, in dem ein Minitunnel angeordnet ist. Dies gilt auch für die Stechvorrichtung, wenn sie sich in einer Ruhelage befindet. Vorzugsweise ist an dem Fahrzeug mindestens ein Sensor vorgesehen, um die Position der Stützelemente festzustellen. Eine am Fahrzeug vorgesehene Steuereinrichtung ist so eingerichtet, dass sie den Stechvorgang verhindert, falls sich die Stützelemente in einem Stechweg des Stechwerkzeugs befinden. Aufgrund der Stützelemente lassen sich nicht alle Spargeltriebe stechen. Diese Spargeltriebe müssen von Hand gestochen werden.

Es kann am Fahrwerk mindestens ein Behältnis vorgesehen sein, in dem die Spargeltriebe abgelegt werden können. Das mindestens eine Behältnis sollte sich vorzugsweise am hinteren Bereich des Wagens befinden. Das Behältnis ist vorzugsweise als Korb ausgebildet. Es kann sich alternativ bei dem Behältnis um ein wassergefülltes Becken mit mehreren Fächern handeln. Vorzugsweise sind mehrere, bzw. drei oder vier Fächer in dem Becken oder drei oder vier Körbe vorgesehen. Da das Stechwerkzeug die Spargeltriebe sehr sauber abschneidet, können die automatisch abgeschnittenen Spargeltriebe manuell sortiert und in das betreffende Fach gelegt werden, so dass ein sofortiger Verkauf der geernteten Spargel direkt vom Feld ohne ein anschließendes aufwändiges Sortieren möglich ist.

Vorzugsweise ist zwischen dem Fahrwerk und dem Pendelstab eine Rückhaltefeder vorgesehen, um den Pendelstab in eine Stechausrichtung zu verbringen. Die Stechausrichtung definiert dabei eine Ausrichtung der Stechvorrichtung, in der das Stechwerkzeug bevorzugt eine Stechbewegung in den Damm ausführt. Die Stechausrichtung kann erfindungsgemäß eine Position sein, in der der Pendelstab senkrecht zum Boden ausgerichtet ist. Alternativ kann in der Stechausrichtung der Pendelstab in Fahrtrichtung verschwenkt sein. Nachdem der Pendelstab entgegengesetzt zu der Fahrtrichtung verschwenkt wurde, soll er schnellstmöglich wieder in seine Ausgangsposition zurückgeführt werden, sobald das Stechwerkzeug den Damm verlassen hat. Umso schneller die Stechvorrichtung wieder in die Stechausrichtung verbracht wird, umso früher kann ein weiterer Stechvorgang durch das Stechwerkzeug ausgeführt werden. Dies kann durch eine Rückhaltefeder bewirkt werden, die erfindungsgemäß den Pendelstab in die Ausgangsposition zieht oder drückt. Auf diese Weise kann die Fahrgeschwindigkeit und damit die Ernteleistung erhöht werden.

Erfindungsgemäß kann am Fahrwerk ein Gegenhalter mit einem Anschlag zur Dämpfung einer Ausrichtungsbewegung des Pendelstabs vorgesehen sein. Wenn der Pendelstab durch die Rückhaltefeder in die Stechausrichtung verbracht wird, bremst der Anschlag die Bewegung des Pendelstabs ab.

Alternativ zu einer Rückhaltefeder kann am Fahrwerk ein Motor und ein Steuer- und/oder Regelsystem vorgesehen sein, um die Ausrichtung des Pendelstabs anzupassen. Bei dieser Ausführungsform kann die Ausrichtung des Pendelstabs genau angepasst werden mittels einer entsprechenden Steuerung und/oder Regelung.

Erfindungsgemäß kann die Pendelachse an einer Traverse verlaufen, die am Fahrwerk befestigt ist. Hierbei handelt es sich um ein Element, das quer zur Fahrtrichtung angeordnet ist. Die Traverse kann höhenverstellbar am Fahrwerk befestigt sein. Dies ist besonders vorteilhaft, denn die Spargelpflanzen können je nach Höhe des Damms in unterschiedlicher Höhe wachsen. Entsprechend muss häufig eine Anpassung der Höhe des Stechwerkzeugs und somit auch des Pendelstabs vorgenommen werden. Es ist ganz besonders bevorzugt, wenn die Traverse durch mindestens ein Verstellelement mit dem Fahrzeug verbunden ist. Das Verstellelement kann als manuelles Verstellelement umfassend zwei gelochte Rohre oder zwei gelochte Bleche ausgeführt sein. Gemäß einer besonderen Ausführungsform ist die Traverse durch mindestens ein als Schwenkarm ausgebildetes Verstellelement über ein Scharnier höhenverstellbar am Fahrwerk befestigt. Vorzugsweise sind zwei Schwenkarme an der Traverse vorgesehen. Dadurch weisen geerntete Spargeltriebe ungefähr die gleiche Länge auf.

Dies ermöglicht eine äußerst schonende und gleichzeitig sehr effiziente Art des Spargelstechens, denn Spargeltriebe gleicher Länge sind direkt verkaufsfertig.

Es ist ganz besonders bevorzugt, wenn die Traverse durch mindestens ein Verstellelement mit dem Fahrwerk verbunden ist. Dabei kann erfindungsgemäß mindestens eines der Verstellelemente als elektromotorisch verstellbare Achse zur Höhenverstellung der Traverse ausgebildet sein. Erfindungsgemäß kann mindestens eines der Verstellelemente eine Bremse aufweisen. Es ist ganz besonders bevorzugt, wenn ein Verstellelement als elektromotorisch verstellbare Welle zur Höhenverstellung der Traverse und das andere Verstellelement als Bremse ausgebildet ist. Zur Anpassung an die Dammhöhe oder die Höhe des zu stechenden Spargels im Damm kann während der Fahrt die Bremse gelöst werden und die Höhe mittels der Welle eingestellt werden.

Vorzugsweise ist der Pendelstab mit einem Pendelrohr verbunden, das drehbar gelagert an der Traverse befestigt ist. Beidseitig des Pendelrohrs kann sich erfindungsgemäß mindestens ein Axiallager befinden, das Stechkräfte quer zum Damm aufnehmen kann. Das Axiallager ist vorzugsweise als eine Spindelhalterung ausgeführt. Gemäß einer möglichen Ausführungsform sitzt das Pendelrohr in Richtung der Pendelachse verschiebbar auf einer Spindel auf, die innerhalb des Pendelrohres angeordnet ist.
Dies macht es möglich, das Pendelrohr und somit auch den Pendelstab und die Stechvorrichtung in einer Richtung quer zur Fahrrichtung zu verschieben. Dies ermöglicht es ferner, eine Anpassung an die Breite des Damms vorzunehmen. Hierdurch lässt sich auch die Einstichtiefe des Stechwerkzeugs in den Damm variieren. Ist ein Spargeltrieb sehr nahe am Rande des Damms angeordnet, so ist nur eine sehr kurze Einstichtiefe notwendig und auch bevorzugt.

Das Pendelrohr kann erfindungsgemäß mit einer Spindelmutter verbunden sein, die auf der Spindel aufsitzt. Wird die Spindel gedreht, so bewegt sich die Spindelmutter und damit auch das Spindelrohr entlang der Spindel. Vorzugsweise weist die Spindelmutter einen Kugelgewindetrieb auf.

Zum Antrieb des Stechgeräts ist vorzugsweise ein Stechmotor vorgesehen. Hierbei handelt es sich bevorzugt um einen getriebelosen bürstenlosen Gleichstrommotor höherer Polzahl. Da kein Getriebe vorliegt, besitzt ein solcher Motor einen hohen Wirkungsgrad. Aus der Massenfertigung sind Motoren dieser Bauart kostengünstig erhältlich. Es können jedoch auch andere Motortypen zur Verwendung kommen. Vorzugsweise ist der Stechmotor in oder an der Stechvorrichtung angeordnet, sodass er mit ihr verschwenkbar ist. Alternativ kann der Motor allerdings auch außerhalb der Stechvorrichtung angeordnet sein. So kann der Motor beispielsweise am Fahrwerk angeordnet sein.

Ganz besonders bevorzugt ist der Stechmotor mit einem Schwingrad verbunden, das über ein Kraftübertragungselement mit dem Stechwerkzeug verbunden ist. Das Kraftübertragungselement kann als Pleuelstange ausgeführt sein. Es sollte vorzugsweise an beiden Enden verschwenkbar gelagert mit dem Schwingrad und dem Stechwerkzeug verbunden sein. Die Kräfte aus der Schwenkbewegung des Schwingrads werden somit über das Kraftübertragungselement auf das Stechwerkzeug übertragen. Durch eine Anordnung mit einem Kraftübertragungselement ist es möglich, den Stechmotor und das Schwingrad beabstandet von dem Stechwerkzeug in der Stechvorrichtung anzuordnen. Ganz besonders bevorzugt sollten dabei der Stechmotor und das Schwingrad am äußeren Rand des Fahrzeugs vorgesehen sein, während das Stechwerkzeug weiter innen vorgesehen ist. Bei einem solchen Aufbau kann erfindungsgemäß eine Folienführung zur Führung einer Folie zwischen dem Pendelrohr und der Stechvorrichtung vorgesehen sein. Ferner kann am Fahrwerk eine Aufnahmerolle zur Aufnahme der Folie vorgesehen sein. Bei einem solchen Aufbau bleibt ein Bereich auf mittlerer Höhe des Fahrzeugs frei, so dass dort in geeigneter Höhe die Folienführung angeordnet werden kann. Somit muss die Folie in diesem Bereich nicht unnötig hoch angehoben werden.

Erfindungsgemäß bewegt der Stechmotor das Schwingrad zwischen zwei nahe beieinander Endlagen hin und her, zwischen denen das Schwingrad eine fast vollständige Umdrehung vollführen kann. An dem Schwingrad können Gewichte vorgesehen sein, um das Massenträgheitsmoment des Schwingrads zu vergrößern. Das Schwingrad kann somit Bewegungsenergie speichern, die beim Auftreffen der Stechvorrichtung auf einen Widerstand im Damm, beispielsweise besonders festes Erdreich, freigesetzt werden kann.

Gemäß einer vorteilhaften Ausführungsform sind auf einer ersten Seite des Schwingrads und auf einer zweiten Seite des Schwingrads Anschläge vorgesehen, sodass eine Schwenkbewegung des Schwingrads zwischen zwei Ruhelagen begrenzt wird. In dem jeweiligen Schwenkweg kann vor dem betreffenden Anschlag eine Dämpfereinrichtung angeordnet sein, um das Schwingrad während einer Schwenkbewegung auf einen Anschlag zu unmittelbar vor dem Anschlag abzubremsen und in der betreffenden Ruhelage halten zu können. Die Dämpfereinrichtung kann einen Stoßdämpfer aufweisen. Es ist ebenfalls möglich, dass beabstandet zu der ersten Seite des Schwingrads und beabstandet zu der zweiten Seite des Schwingrads sich in einem Schwenkweg der Anschläge jeweils ein federnd gelagerter Magnet mit einem Gummipuffer befindet. Ein Vorteil dieses Aufbaus besteht darin, dass der Stechmotor von den Magneten jeweils in den Ruhelagen gehalten wird, ohne dass der Stechmotor bestromt werden muss. Die Anschläge können Anschlagflächen aus Stahl aufweisen. Die federnde Lagerung der Magnete und die Gummipuffer sorgen dafür, dass die mechanische Energie, die in dem rotierenden Schwingrad gespeichert ist, allmählich abgebaut wird. Vorzugsweise ist an einem der Anschläge das Kraftübertragungselement verschwenkbar gelagert. Hierdurch ist ein vorteilhafter Befestigungspunkt für das Kraftübertragungselement vorgegeben.

Gemäß einer vorteilhaften Ausführungsform umfasst das Stechwerkzeug einen Schwingarm, der um ein Stechlager verschwenkbar gelagert ist, wobei an dem Schwingarm das Kraftübertragungselement gelagert ist. Das Stechlager kann erfindungsgemäß in einem Kragarm der Stechvorrichtung angeordnet sein. Das Stechwerkzeug umfasst bevorzugt außerdem einen Messerhalter und ein Messerrohr. Der Messerhalter kann erfindungsgemäß um das Stechlager im Kragarm verschwenkbar gelagert sein. Besonders bevorzugt ist um das Stechlager der Schwingarm in einem festen Winkel zu dem Messerhalter ausgerichtet. Der Messerhalter ist vorzugsweise in einem rechten Winkel zu dem Schwingarm gelagert. Der Schwingarm ist bevorzugt mit dem Messerhalter fest verbunden und ganz besonders bevorzugt ist der Schwingarm mit dem Messerhalter verschweißt. An dem Messerhalter ist vorzugsweise abnehmbar das Messerrohr befestigt. Das Messerrohr besteht bevorzugt aus einem geraden Stück, das am Messerhalter befestigt ist und einem kreisförmig gebogenen Stück, wobei die kreisbogenförmige Kontur konzentrisch um das Stechlager verläuft, so dass bei einer Rotationsbewegung und einem dadurch bewirkten Eindringen des kreisförmig gebogenen Stücks in den Spargeldamm die angreifenden Reibungskräfte möglichst gering sind. Der Messerhalter weist eine zusätzliche Verstärkung auf, um die während des Betriebs auftretenden Stechkräfte aufzunehmen. Ganz besonders bevorzugt ist das Messerrohr lösbar an dem Messerhalter befestigt. Die Befestigung des Messerrohrs am Schwingarm ist vorzugsweise so ausgebildet, dass Kräfte, die in Fahrtrichtung auf das Messer wirken, auf den Schwingarm übertragen werden, ohne dass eine Eigenbewegung des Messerrohrs relativ zum Messerhalter möglich ist. Eine Schwenkbewegung des Schwingrads wird in eine Bewegung des Schwingarms und damit auch des Messerhalters und des Messerrohrs überführt.

Vorzugsweise weist das Messerrohr einen gebogenen Teil auf. Der gebogene Teil des Messerrohrs besitzt an einem Ende bevorzugt eine Nut, in die eine Wechselklinge eingeschoben und über mindestens eine, ganz bevorzugt zwei Befestigungsbohrungen mit dem Messerrohr verschraubt werden kann. Da die Wechselklingen in regelmäßigen Abständen geschärft werden müssen, ist es vorteilhaft, wenn sie leicht ausgetauscht werden können.

Das Ende der Wechselklinge kann erfindungsgemäß als Schwalbenschwanz ausgebildet sein. Dadurch kann sich die Klinge bei leichten Positionsabweichungen eines zu stechenden Spargeltriebs selbst zentrieren.

Besonders bevorzugt ist das Kraftübertragungselement am Schwingarm gelagert. Ganz besonders bevorzugt sollten die Länge des Kraftübertragungselements sowie dessen Eingriffspunkte am Schwingrad und am Schwingarm so gewählt werden, dass in einem Umkehrpunkt, in dem sich das Stechwerkzeug am weitesten in den Damm hineinbewegt hat und seine Bewegungsrichtung wieder umkehrt, eine Schwenkbewegung des Schwingrads eine möglichst geringe Schwenkbewegung des Schwingarms und damit der Wechselklinge an dem Stechwerkzeug hervorruft. Dies führt zu einer sanften Bewegung durch den Umkehrpunkt. Ferner sollte vorzugsweise die Anordnung so aufgebaut sein, dass bei jedem vollständigen Verschwenkungsvorgang des Schwingrads von einer Ruhelage zur anderen Ruhelage ein vollständiger Stechvorgang durchgeführt wird, bei dem die Stechvorrichtung in den Damm eindringt und wieder aus diesem austritt.

Gemäß einer weiteren vorteilhaften Ausführungsform der Erfindung kann am Pendelstab eine in Fahrtrichtung verlaufende Hebelachse vorgesehen sein, um die ein Kragarm verschwenkbar gelagert ist, und wobei das Stechwerkzeug um ein Stechlager verschwenkbar am Kragarm befestigt ist. Bei dem Stechlager kann es sich erfindungsgemäß um das vorhergehend genannte Stechlager handeln, um das der Schwingarm verschwenkbar gelagert ist. Somit können erfindungsgemäß sowohl das Stechwerkzeug als auch der Schwingarm um dasselbe Stechlager verschwenkbar gelagert sein. Wenn ein Spargeltrieb von dem Stechwerkzeug in einer gleichförmigen Bewegung vollständig durchtrennt wird, sitzt er in Abhängigkeit von der Bodenbeschaffenheit gelegentlich immer noch so fest im Erdreich, dass es nicht möglich ist, ihn ohne Beschädigung aus dem Damm zu entfernen. Erntehelfer führen deshalb nach dem Stechen eine hebelartige Bewegung mit dem Messer durch, um den Spargel etwas anzuheben. Danach kann der Spargel leicht entnommen werden. Damit der Kragarm eine solche Hebelbewegung durchführen kann, wird er gemäß dieser Ausführungsform verschwenkbar um die Hebelachse gelagert.

Vorzugsweise wird der Kragarm durch einen Kragarmhalter an dem Pendelstab gehalten, sodass in einer Ruheposition der Kragarm senkrecht zum Pendelstab ausgerichtet ist. Die senkrechte Ausrichtung des Kragarms bildet hierbei dessen gewöhnliche Position. Lediglich bei einem Hebelvorgang bewegt sich der Kragarm an demjenigen Ende, an dem das Stechwerkzeug vorgesehen ist, nach oben. Um den Hebelvorgang zu bewirken, ist erfindungsgemäß am Schwingrad ein Auslenkelement vorgesehen, das bei einer Schwenkbewegung des Schwingrads so in ein an dem Kragarm vorgesehenes Hebelelement eingreift, dass der Kragarm ausgelenkt wird. Das Auslenkelement ist vorzugsweise als eine drehbar gelagerte Rolle ausgebildet.

Der Kragarmhalter kann erfindungsgemäß zusammenschiebbar ausgeführt sein. Dies wird vorzugsweise mittels einer Gasdruckfeder oder mittels eines Langlochs bewirkt. Eine entsprechende Ausgestaltung des Kragarmhalters ist möglich, da der Kragarmhalter durch das Eigengewicht des Kragarms nach unten gezogen wird.

Erfindungsgemäß kann an dem Kragarm ein Hebelelement vorgesehen sein, das dazu ausgebildet ist, eine Kraftwirkung des Auslenkelements aufzunehmen. Gemäß einer möglichen Ausführungsform ist der Kragarm als ein Rohr ausgebildet, in dem sich als ein Hebelelement ein in dem Rohr verfahrbarer, zweiseitig federnd gelagerter Läufer mit einem in Richtung des Schwingrads durch eine Aussparung des Rohrs herausragenden Eingriffselement befindet. Bei dem Eingriffselement kann es sich um eine abgerundete Lasche handeln. Trifft das Auslenkelement auf das Eingriffselement, so bewegt es das Eingriffselement und damit den Läufer innerhalb des Kragarms und drückt dabei den Kragarm herunter. Somit erfolgt die Kraftwirkung des Hebelelements auf das Kragrohr nicht plötzlich, sondern sie wird durch die Bewegung des Läufers verzögert. Das Auslenkelement und das Eingriffselement sollten vorzugsweise so positioniert sein, dass die Hebelbewegung in der Nähe des Umkehrpunkts hervorgerufen wird. Die vorwiegend in senkrechter Richtung wirkenden Hebelkräfte können dabei gemäß einer möglichen Ausführungsform durch die Verstellelemente aufgenommen werden.

Besonders bevorzugt umfasst das Fahrzeug eine Sensorvorrichtung und ein Steuer- und/oder Regelsystem zur Ansteuerung der mindestens einen Stechvorrichtung, um eine automatische Auslösung eines Stechvorgangs durch die Stechvorrichtung vorzunehmen. Das Steuer- und/oder Regelsystem kann dabei erfindungsgemäß so eingerichtet sein, dass es Spargeltriebe erkennt und daraufhin eine Steuerung des Stechmotors entsprechend vornimmt, um den Stechvorgang auszulösen. Dabei können auch weitere Motoren angesteuert werden, beispielsweise der Motor zur Ausrichtung des Pendelstabs und der Motor zum Antrieb der Spindel. Das Sensorsystem ist vorzugsweise als ein Kamerasystem ausgeführt. Das Steuer- und/oder Regelsystem kann auch so ausgelegt sein, dass es schneller fährt, wenn wenige Spargeltriebe im Damm vorhanden sind, und langsamer fährt, wenn viele Spargeltriebe im Damm vorhanden sind. Es kann ferner so ausgelegt sein, dass es während des Stechvorgangs die Fahrtgeschwindigkeit drosselt. Die Geschwindigkeit des Fahrzeugs kann auch vorausschauend in Abhängigkeit von den im Damm erkannten und abzuschneidenden Spargeln vorgegeben und ständig angepasst werden. Hierdurch kann die Erntegeschwindigkeit weiter erhöht werden.

Gemäß einer möglichen Ausführungsform ist am Fahrzeug zusätzlich eine Benutzersteuerung vorgesehen. Diese kann beispielsweise als eine Schnur ausgeführt sein, an dem ein Benutzer ziehen kann, um das Fahrzeug zu starten beziehungsweise zu stoppen. Vorzugsweise ist die Benutzersteuerung als Gestensteuerung ausgeführt. Mittels einer solchen Gestensteuerung ist es möglich, das Fahrzeug mit einer Handgeste zur starten und zu stoppen. Hierfür kann am Fahrzeug zusätzlich eine Vorrichtung zur Gestenerkennung vorgesehen sein. Erfindungsgemäß kann es sich hierbei um ein Computersystem mit einem Kamerasystem handeln. Erfindungsgemäß kann es sich hierbei alternativ oder zusätzlich um ein oder mehrere Sensoren handeln, die vorzugsweise auf der Basis von Ultraschall arbeiten oder um eine intelligente Kamera mit Auswertesoftware.

Gemäß einer bevorzugten Ausführungsform ist das Fahrzeug so aufgebaut, dass an gegenüberliegenden Seiten des Fahrwerks zwei Stechvorrichtungen in Fahrtrichtung zueinander versetzt vorgesehen sind. Die Anbringung der Stechvorrichtungen an gegenüberliegenden Seiten des Fahrwerks ist im Hinblick auf das Gleichgewicht des Fahrzeugs vorteilhaft. Die Verwendung von zwei Stechvorrichtungen ist weiterhin insofern von Vorteil, als dass eine Stechvorrichtung den Damm nur schwerlich durchdringen kann. Werden zwei Stechvorrichtungen eingesetzt, so müssen diese den Damm jeweils nur hälftig durchdringen. Es ist auch deshalb von Vorteil, wenn mehrere Stechwerkzeuge eingesetzt werden, da hierdurch die Erntegeschwindigkeit und somit auch die Fahrtgeschwindigkeit erhöht werden kann. Sind zwei Stechvorrichtungen vorgesehen, so kann dadurch, dass diese in Fahrtrichtung versetzt angeordnet sind, vermieden werden, dass sich die Stechwerkzeuge beim Erntevorgang einander berühren und dabei beschädigen. Um die Ernteleistung zu steigern, können erfindungsgemäß mehr als zwei Stechvorrichtungen am Fahrzeug vorgesehen sein.

Weitere vorteilhafte Ausführungsformen der Erfindung sind in den Zeichnungen dargestellt. Dabei zeigt:
Fig. 1 eine schematische Vorderansicht eines Fahrwerks einer möglichen Ausführungsform des erfindungsgemäßen Fahrzeugs,
Fig. 2 eine schematische Vorderansicht einer Stechvorrichtung und deren Befestigung am Fahrzeug,
Fig. 3 eine schematische Seitenansicht eines Pendelstabs und dessen Befestigung am Fahrzeug und
Fig. 4 eine schematische Ansicht von oben auf eine Wechselklinge.

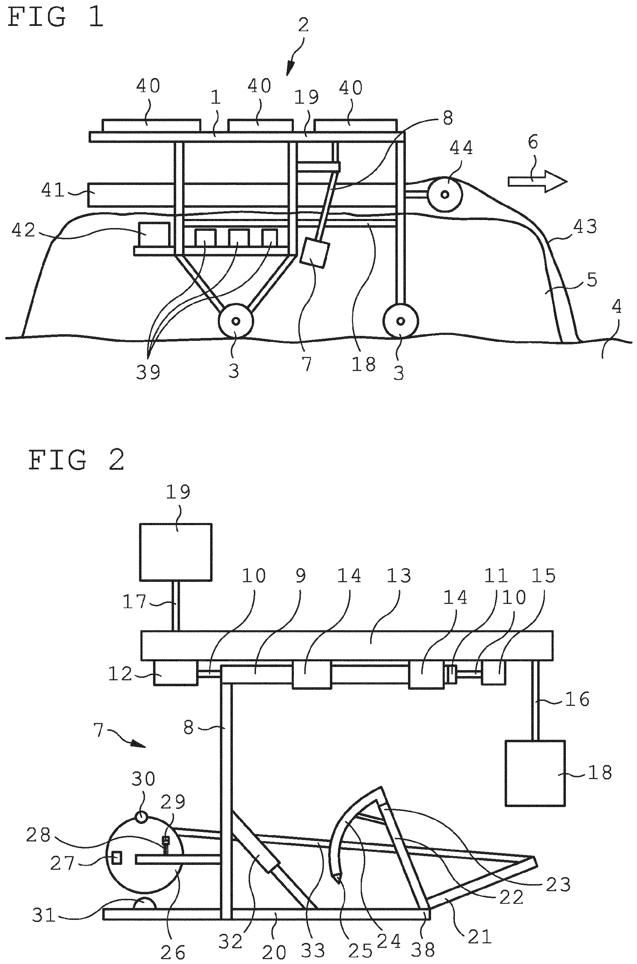

Fig. 1 zeigt eine schematische Vorderansicht eines Fahrwerks 1 einer möglichen Ausführungsform eines erfindungsgemäßen Fahrzeugs 2. Das Fahrzeug 2 verfügt über ein hinteres Fahrwerk 1, an dem die Antriebsräder 3 montiert sind. Über den Antriebsrädern 3 sind mehrere Batterien 39 angeordnet und darüber befindet sich eine große Ablagefläche für das Erntegut. Der Erntehelfer geht hinter dem Fahrzeug 2 her, entnimmt die geschnittenen Spargeltriebe und legt sie in ein oder mehrere in einem hinteren Bereich am Fahrwerk 1 befindliche Behältnisse 42. Vorne am Fahrzeug 2 ist in einem zur Fahrtrichtung linken und einem rechten Bereich je eine Lenkrolle angebracht, die auf jeder Seite des Dammes 5 rollt und das Fahrzeug 2 in der Spur hält. Das Fahrzeug 2 ist zum Befahren eines Ackers 4 geeignet, auf dem sich ein Damm 5 befindet. Das Fahrzeug 2 fährt entlang des Damms 5 in Richtung des Fahrtrichtungspfeils 6, der nicht Teil der Ausführungsform und nur der Verdeutlichung der Fahrtrichtung dient. Dabei ist an dem Fahrzeug 2 mindestens eine Stechvorrichtung 7 zum Ernten von Spargel aus dem Damm 5 vorgesehen. Die Stechvorrichtung 7 ist an einem Pendelstab 8 befestigt, der in Fahrtrichtung verschwenkbar ist. Die Stechvorrichtung erntet Spargel seitlich aus dem Damm 5 im Entlangfahren.

Fig. 2 zeigt eine schematische Vorderansicht einer Stechvorrichtung 7 und deren Befestigung am Fahrzeug 2. Die Stechvorrichtung 7 umfasst einen Pendelstab 8, der mit einem Pendelrohr 9 verbunden ist. Das Pendelrohr 9 sitzt auf einer Spindel 10 drehbar gelagert auf. Das Pendelrohr 9 ist mit einer Spindelmutter 11 verbunden, die ebenfalls auf der Spindel 10 aufsitzt. Die Spindel 10 ist mit einem Motor 12 verbunden, der die Spindel 10 antreibt. Dadurch ändert sich die Position des Pendelrohrs 9 und damit auch des Pendelstabs 8 auf der Spindel 10. Dies ermöglicht es, die Position des Pendelstabs 8 anzupassen, wenn sich die Breite des Damms 5 ändert.

Der Motor 12 und das Pendelrohr 9 sind an einer Traverse 13 an zwei Lagern 14 und zwei Spindelhalterungen 15 aufgehängt. Das Pendelrohr 9 ist in den Lagern 14 dreh- und schiebbar gelagert. Die Traverse 13 ist über ein erstes Verstellelement 16 und ein zweites Verstellelement 17 mit dem in Fig. 2 nicht vollständig gezeigten Fahrzeug 2 verbunden. Das erste Verstellelement 16 und das zweite Verstellelement 17 sind dabei mit einem unteren Längsträger 18 und einem oberen Längsträger 19 verbunden. Die Längsträger 18 und 19 verbinden als tragende Teile das Fahrwerk 1 mit einer vorzugsweise pendelnd aufgehängten Vorderachse. Die oberen Längsträger 19 halten neben der Stechvorrichtung auch Solarpanels 40. Die unteren Längsträger 18 sind so ausgebildet, dass sie nach einer Entfernung der Antriebsräder 3 im vorderen Bereich des Fahrzeugs 2 als Deichsel verwendet werden können, sodass das Fahrzeug 2 im Anhängerbetrieb verwendet werden kann. Auf diese Weise kann das Fahrzeug 2 schnell mit einem Personenkraftwagen oder einem Traktor zu seinem Einsatzort gebracht werden.

Der Pendelstab 8 ist mit einem Kragarm 20 verschwenkbar verbunden. An einem Ende des Kragarms 20 ist ein Schwingarm 21 verschwenkbar gelagert. Der Schwingarm 21 ist in einem festen Winkelabstand mit einem Messerhalter 23 verbunden. Schwingarm 21 und Messerhalter 23 sind an einem Ende des Kragarms 20 in einem Stechlager 38 schwenkbar gelagert. An dem Messerhalter 23 ist ein Messerrohr 24 montiert. Das Messerrohr 24 hat einen geraden und einen kreisförmig gebogenen Abschnitt. Am Ende des kreisförmig gebogenen Abschnitts ist eine Wechselklinge 25 befestigt.

Über dem Kragarm 20 ist ein Schwingrad 26 vorgesehen, das durch einen Stechmotor (nicht gezeigt) angetrieben wird. An dem Schwingrad 26 ist beidseitig ein Anschlag 27 befestigt, sodass die Schwenkbewegung des Schwingrads 26 durch ein Auftreffen des Anschlags 27 auf einen federnd gelagerten Magneten 28 mit einem Gummipuffer 29 begrenzt wird. Durch den Magneten wird der Anschlag 27 in einer Endstellung gehalten, ohne dass der Stechmotor mit Strom beaufschlagt wird.

An der Kante des Schwingrads 26 ist ferner eine Rolle 30 vorgesehen. Dreht sich das Schwingrad 26, so trifft die Rolle 30 auf eine Lasche 31, die verschiebbar in dem Kragarm 20 gelagert ist. In dem Kragarm 20 befindet sich hierzu ein gefederter Läufer. Durch die Einwirkung der Rolle 30 auf die Lasche 31 werden der Kragarm 20 und das Stechwerkzeug 22 verschwenkt. Das Stechwerkzeug 22 führt dadurch eine ruckartige Hebelbewegung aus, die dazu dient, einen Spargeltrieb mit der Wechselklinge 25 aus dem Damm 5 zu lösen.

Der Kragarm 20 wird durch einen Kragarmhalter 32 an dem Pendelstab 8 gehalten, sodass in einer Ruheposition der Kragarm 20 senkrecht zu dem Pendelstab 8 ausgerichtet ist. Der Kragarmhalter 32 ist dabei verschwenkbar sowohl am Pendelstab 8 als auch am Kragarm 20 aufgehängt. Der Kragarmhalter 32 weist eine maximale Länge auf, lässt sich aber bei einer Hebelbewegung des Kragarms 20 zusammenschieben. Das Schwingrad 26 ist mit dem Schwingarm 21 durch ein Kraftübertragungselement 33 verbunden.

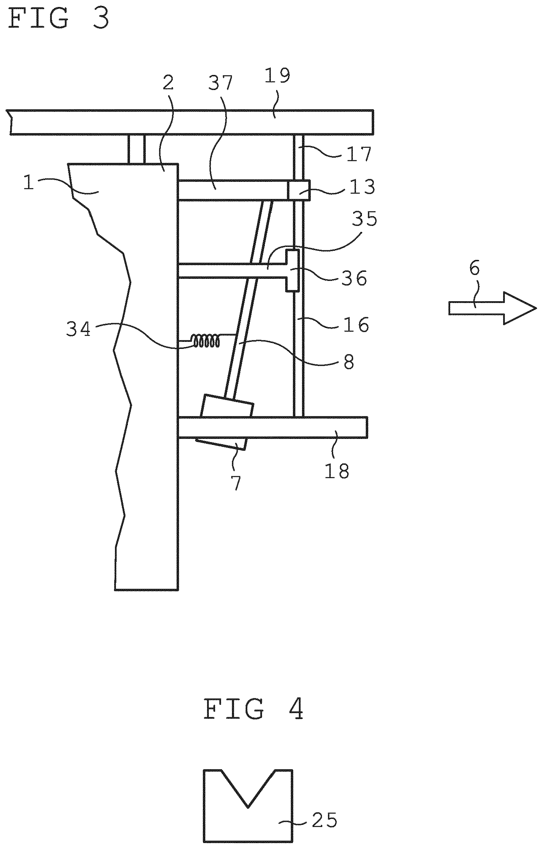

Fig. 3 zeigt eine schematische Seitenansicht eines Pendelstabs 8 und dessen Befestigung am Fahrzeug 2. Das Fahrzeug 2 bewegt sich bei der Spargelernte in Richtung des Fahrtrichtungspfeils 6, der lediglich zur Verdeutlichung der Fahrtrichtung gezeigt wird und keinen Teil der Ausführungsform bildet. Der Pendelstab 8 ist mit der Traverse 13 verbunden, die wiederum über das erste Verstellelement 16 mit einem unteren Längsträger 18 des Fahrwerks 1 und über das zweite Verstellelement 17 mit einem oberen Längsträger 19 des Fahrwerks 1 verbunden ist. Am unteren Ende des Pendelstabs 8 befindet sich die Stechvorrichtung 7. Wird der Pendelstab 8 durch eine Einwirkung des Damms 5 auf eine am Pendelstab 8 befestigte Stechvorrichtung 7 entgegengesetzt zu der Fahrtrichtung ausgelenkt, so wird der Pendelstab 8 anschließend durch eine Rückhaltefeder 34 wieder in seine Ausgangsposition verbracht. Ein Gegenhalter 35 mit einem Anschlag 36 bremst dabei die Bewegung des Pendelstabs 8 ab. Die Traverse 13 ist durch einen Schwenkarm 37 verschwenkbar mit dem Fahrwerk 1 verbunden.

Fig. 4 zeigt eine schematische Ansicht von oben auf eine Wechselklinge 25. Diese Wechselklinge 25 ist dabei in einer Schwalbenschwanzform ausgeführt. Dadurch wird die Wechselklinge 25 auch dann auf einen Spargeltrieb zentriert, wenn sie nicht vollkommen mittig auf diesen auftrifft. Eine entsprechende Positionierung der Wechselklinge 25 wird dadurch erleichtert, dass die Stechvorrichtung 7 an dem Pendelrohr 9 verschwenkbar aufgehängt ist, sodass eine Bewegung der Wechselklinge 25 in einer Querrichtung zum Spargeltrieb möglich ist.

### BEZUGSZEICHENLISTE

1. Fahrwerk
2. Fahrzeug
3. Antriebsrad
4. Acker
5. Damm
6. Fahrtrichtungspfeil
7. Stechvorrichtung
8. Pendelstab
9. Pendelrohr
10. Spindel
11. Spindelmutter
12. Motor
13. Traverse
14. Lager
15. Spindelhalterung
16. Erstes Verstellelement
17. Zweites Verstellelement
18. Unterer Längsträger
19. Oberer Längsträger
20. Kragarm
21. Schwingarm
22. Stechwerkzeug
23. Messerhalter
24. Messerrohr
25. Wechselklinge
26. Schwingrad
27. Anschlag
28. Federnd gelagerter Magnet
29. Gummipuffer
30. Rolle
31. Lasche
32. Kragarmhalter
33. Kraftübertragungselement
34. Rückhaltefeder
35. Gegenhalter
36. Anschlag des Gegenhalters
37. Schwenkarm
38. Stechlager
39. Batterie
40. Solarpanel
41. Folienführung
42. Behältnis
43. Folie
44. Aufnahmerolle

## Patentansprüche

1. Fahrzeug (2) zum Stechen von Spargel im Fahren mit einem Fahrwerk (1) und mindestens einer Stechvorrichtung (7) mit einem Stechwerkzeug (22), das dazu eingerichtet ist, eine Stechbewegung quer zur Fahrtrichtung des Fahrzeugs (2) durchzuführen, sodass das Stechwerkzeug (22) seitlich in einen Damm (5) einbringbar ist, **dadurch gekennzeichnet, dass** die Stechvorrichtung (7) mit einem Pendelstab (8) verbunden ist, der um eine Pendelachse verschwenkbar am Fahrwerk (1) gelagert ist, sodass die Stechvorrichtung (7) in der Fahrtrichtung des Fahrzeugs (2) verschwenkbar ist, um die Bewegung des Stechwerkzeugs (22) in der Fahrtrichtung zu verlangsamen oder sogar vollkommen abzubremsen, nachdem das Stechwerkzeug (22) in den Damm (5) eingedrungen ist, während das Fahrzeug (2) seine Geschwindigkeit beibehält.

2. Fahrzeug (2) nach Anspruch 1, **dadurch gekennzeichnet, dass** zwischen dem Fahrwerk (1) und dem Pendelstab (8) eine Rückhaltefeder (34) vorgesehen ist, um den Pendelstab (8) in eine Stechausrichtung zu verbringen.

3. Fahrzeug (2) nach Anspruch 2, **dadurch gekennzeichnet, dass** am Fahrwerk (1) ein Gegenhalter (35) vorgesehen ist mit einem Anschlag (36) zur Dämpfung einer Ausrichtungsbewegung des Pendelstabs (8), wenn der Pendelstab (8) durch die Rückhaltefeder (34) in die Stechausrichtung verbracht wird.

4. Fahrzeug (2) nach Anspruch 1, **dadurch gekennzeichnet, dass** am Fahrwerk (1) ein Motor und ein Steuer- und/oder Regelsystem vorgesehen sind, um die Ausrichtung des Pendelstabs (8) anzupassen.

5. Fahrzeug (2) nach einem der vorhergehenden Ansprüche, **dadurch gekennzeichnet, dass** der Pendelstab (8) mit einem Pendelrohr (9) verbunden ist, das drehbar auf einer Spindel (10) aufsitzt, die entlang der Pendelachse verläuft, wobei das Pendelrohr (9) in Richtung der Pendelachse verschiebbar auf der Spindel (10) aufsitzt.

6. Fahrzeug (2) nach einem der vorhergehenden Ansprüche, **dadurch gekennzeichnet, dass** zum Antrieb der Stechvorrichtung (7) ein Stechmotor vorgesehen ist.

7. Fahrzeug (2) nach Anspruch 6, **dadurch gekennzeichnet, dass** der Stechmotor einen Teil der Stechvorrichtung (7) bildet und mit einem Schwingrad (26) verbunden ist, das über ein Kraftübertragungselement (33) mit dem Stechwerkzeug (22) verbunden ist.

8. Fahrzeug (2) nach Anspruch 7, **dadurch gekennzeichnet, dass** auf einer ersten Seite des Schwingrads (26) und auf einer zweiten Seite des Schwingrads (26) Anschläge (27) vorgesehen sind, sodass eine Schwenkbewegung des Schwingrads (26) begrenzt wird und das Schwingrad (26) jeweils in einer maximalen Schwenkposition gehalten werden kann.

9. Fahrzeug (2) nach einem der vorhergehenden Ansprüche, **dadurch gekennzeichnet, dass** ein Schwingarm (21) um ein Stechlager (38) verschwenkbar gelagert ist, wobei an dem Schwingarm (21) das Kraftübertragungselement (33) gelagert ist.

10. Fahrzeug (2) nach Anspruch 9, **dadurch gekennzeichnet, dass** am Schwingarm (21) eine gebogene Wechselklinge (25) vorgesehen ist.

11. Fahrzeug (2) nach einem der vorhergehenden Ansprüche, **dadurch gekennzeichnet, dass** am Pendelstab (8) eine in Fahrtrichtung verlaufende Hebelachse vorgesehen ist, um die ein Kragarm (20) verschwenkbar gelagert ist, und wobei das Stechwerkzeug (22) um ein Stechlager (38) verschwenkbar am Kragarm (20) befestigt ist.

12. Fahrzeug (2) nach Anspruch 11, **dadurch gekennzeichnet, dass** der Kragarm (20) durch einen Kragarmhalter (32) an dem Pendelstab (8) gehalten wird, sodass in einer Ruheposition der Kragarm (20) senkrecht zum Pendelstab (8) ausgerichtet ist.

13. Fahrzeug (2) nach Anspruch 11 oder 12, **dadurch gekennzeichnet, dass** am Schwingrad (26) ein Auslenkelement vorgesehen ist, das bei einer Schwenkbewegung des Schwingrads (26) so in ein an dem Kragarm (20) vorgesehenes Hebelelement eingreift, dass der Kragarm (20) ausgelenkt wird.

14. Fahrzeug (2) nach Anspruch 13, **dadurch gekennzeichnet, dass** der Kragarm (20) als ein Rohr ausgebildet ist, in dem sich als ein Hebelelement ein in dem Rohr verfahrbarer, zweiseitig federnd gelagerter Läufer mit einem in Richtung des Schwingrads (26) durch eine Aussparung des Rohrs herausragenden Eingriffselement befindet.

15. Fahrzeug (2) nach einem der vorhergehenden Ansprüche, **dadurch gekennzeichnet, dass** das Fahrzeug (2) mindestens eine Sensorvorrichtung und ein Steuer- und/oder Regelsystem zur Ansteuerung der mindestens einen Stechvorrichtung (7) aufweist, um eine automatische Auslösung eines Stechvorgangs durch die Stechvorrichtung (7) vorzunehmen.

## Claims

1. Vehicle (2) for cutting asparagus while driving, with an under-carriage (1) and at least one cutting device (7) with a cutting tool (22), which is configured to carry out a cutting movement transversally to the travel direction of the vehicle (2), so that the cutting tool (22) can be brought into a dam (5) laterally, **characterized in that** the cutting device (7) is connected to a pendulum rod (8) which is mounted on the under-carriage (1) in a manner to be pivotable about a pendulum axis, so that the cutting device (7) is pivotable in the travel direction of the vehicle (2), in order to slow or even completely brake the movement of the cutting tool (22) in the travel direction after the cutting tool (22) entered the dam (5), while the vehicle (2) maintains its travel speed.

2. Vehicle (2) according to claim 1, **characterized in that** a retaining spring (34) is provided between the under-carriage (1) and the pendulum rod (8), in order to displace the pendulum rod (8) to a cutting orientation.

3. Vehicle (2) according to claim 2, **characterized in that** a counterholder (35) is provided on the under-carriage (1), with a stop (36) for dampening an orientation movement of the pendulum rod (8) when the pendulum rod (8) is displaced to the cutting orientation by means of the retaining spring (34).

4. Vehicle (2) according to claim 1, **characterized in that** a motor and a controlling and/or regulating system are provided on the under-carriage (1) in order to adjust the orientation of the pendulum rod (8).

5. Vehicle (2) according to any one of the preceding claims, **characterized in that** the pendulum rod (8) is connected with a pendulum pipe (9), which is rotatably placed onto a spindle (10) that extends along the pendulum axis, wherein the pendulum pipe (9) is placed onto the spindle (10) in a manner displaceable in the direction of the pendulum axis.

6. Vehicle (2) according to any one of the preceding claims, **characterized in that** a cutting motor is provided to drive the cutting device (7).

7. Vehicle (2) according to claim 6, **characterized in that** the cutting motor forms part of the cutting device (7) and is connected to a flywheel (26), which is connected with the cutting tool (22) via a force transmission element (33).

8. Vehicle (2) according to claim 7, **characterized in that** stops (27) are provided on a first side of the flywheel (26) and on a second side of the flywheel (26), so that a pivoting movement of the flywheel (26) is restricted and the flywheel (26) can respectively be held in a maximum pivoted position.

9. Vehicle (2) according to any one of the preceding claims, **characterized in that** a swing arm (21) is mounted to be pivotable about a cutting bearing (38), wherein the force transmission element (33) is mounted on the swing arm (21) .

10. Vehicle (2) according to claim 9, **characterized in that** a bent interchangeable blade (25) is provided on the swing arm (21).

11. Vehicle (2) according to any one of the preceding claims, **characterized in that** a lever axis extending in the travel direction is provided on the pendulum rod (8), about which a cantilever (20) is pivotably mounted, and wherein the cutting tool (22) is fastened to the cantilever (20) in a manner to be pivotable about a cutting bearing (38).

12. Vehicle (2) according to claim 11, **characterized in that** the cantilever (20) is held on the pendulum rod (8) by means of a cantilever holder (32), so that the cantilever (20) is oriented perpendicularly to the pendulum rod (8) in a resting position.

13. Vehicle (2) according to claim 11 or 12, **characterized in that** a deflection element is provided on the flywheel (26), which engages into a lever element provided on the cantilever (20) in a pivoting movement of the flywheel (26) in such a way that the cantilever (20) is deflected.

14. Vehicle (2) according to claim 13, **characterized in that** the cantilever (20) is formed as a tube, in which a rotor is located, which is displaceable in the tube and resiliently-mounted on two sides and which comprises an engagement element that protrudes through a cut-out of the tube in the direction of the flywheel (26).

15. Vehicle (2) according to any one of the preceding claims, **characterized in that** the vehicle (2) comprises at least one sensor device and a controlling and/or regulating system for the actuation of the at least one cutting device (7), in order to perform an automatic triggering of a cutting process by means of the cutting device (7).

## Revendications

1. Véhicule (2) de cueillette d'asperges en roulant avec un châssis de roulement (1) et au moins un dispositif de cueillette (7) avec un outil de cueillette (22), qui est configurer pour effectuer un mouvement de cueillette de manière transversale par rapport à la direction de déplacement du véhicule (2) de sorte que l'outil de cueillette (22) peut être introduit de manière latérale dans un billon (5), **caractérisé en ce que** le dispositif de cueillette (7) est relié à une barre pendulaire (8), qui est montée au niveau du châssis de roulement (1) de manière à pouvoir pivoter autour d'un axe pendulaire, de sorte que le dispositif de cueillette (7) peut être pivoté dans la direction de déplacement du véhicule (2) afin de ralentir le déplacement de l'outil de cueillette (22) dans la direction de déplacement voire de le freiner totalement, après que l'outil de cueillette (22) a été enfoncé dans le billon (5), tandis que le véhicule (2) maintient sa vitesse.

2. Véhicule (2) selon la revendication 1, **caractérisé en ce qu'**est prévu entre le châssis de roulement (1) et la barre pendulaire (8) un ressort de retenue (34) afin d'amener la barre pendulaire (8) dans une orientation de cueillette.

3. Véhicule (2) selon la revendication 2, **caractérisé en ce qu'**est prévu au niveau du châssis de roulement (1) un élément de maintien antagoniste (35) avec une butée (36) servant à amortir un déplacement d'orientation de la barre pendulaire (8) quand la barre pendulaire (8) est amenée par le ressort de retenue (34) dans l'orientation de cueillette.

4. Véhicule (2) selon la revendication 1, **caractérisé en ce que** sont prévus au niveau du châssis de roulement (1) un moteur et un système de commande et/ou de régulation afin d'ajuster l'orientation de la barre pendulaire (8).

5. Véhicule (2) selon l'une quelconque des revendications précédentes, **caractérisé en ce que** la barre pendulaire (8) est reliée à un tuyau pendulaire (9), qui repose de manière à pouvoir tourner sur une broche (10), qui s'étend le long de l'axe pendulaire, dans lequel le tuyau pendulaire (9) repose sur la broche (10) de manière à pouvoir être coulissé en direction de l'axe pendulaire.

6. Véhicule (2) selon l'une quelconque des revendications précédentes, **caractérisé en ce qu'**un moteur de cueillette est prévu pour entraîner le dispositif de cueillette (7).

7. Véhicule (2) selon la revendication 6, **caractérisé en ce que** le moteur de cueillette forme une partie du dispositif de cueillette (7) et est relié à un volant d'inertie (26), qui est relié par l'intermédiaire d'un élément de transmission de force (33) à l'outil de cueillette (22).

8. Véhicule (2) selon la revendication 7, **caractérisé en ce que** des butées (27) sont prévues sur un premier côté du volant d'inertie (26) et sur un second côté du volant d'inertie (26), si bien qu'un déplacement par pivotement du volant d'inertie (26) est limité et le volant d'inertie (26) peut être maintenu respectivement dans une position de pivotement maximale.

9. Véhicule (2) selon l'une quelconque des revendications précédentes, **caractérisé en ce qu'**un bras oscillant (21) est monté de manière à pouvoir pivoter autour d'un palier de cueillette (38), dans lequel l'élément de transmission de force (33) est monté au niveau du bras oscillant (21).

10. Véhicule (2) selon la revendication 9, **caractérisé en ce qu'**une lame interchangeable (25) cintrée est prévue au niveau du bras oscillant (21).

11. Véhicule (2) selon l'une quelconque des revendications précédentes, **caractérisé en ce qu'**est prévu au niveau de la barre pendulaire (8) un axe de levier s'étendant dans la direction de déplacement, autour duquel un cantilever (20) est monté de manière à pouvoir pivoter, et dans lequel l'outil de cueillette (22) est fixé au niveau du cantilever (20) de manière à pouvoir pivoter autour d'un palier de cueillette (38).

12. Véhicule (2) selon la revendication 11, **caractérisé en ce que** le cantilever (20) est maintenu par un support de cantilever (32) au niveau de la barre pendulaire (8) de sorte que dans une position de repos, le cantilever (20) est orienté de manière perpendiculaire par rapport à la barre pendulaire (8).

13. Véhicule (2) selon la revendication 11 ou 12, **caractérisé en ce qu'**est prévu au niveau du volant d'inertie (26) un élément de déviation, qui vient en prise, dans le cas d'un déplacement par pivotement du volant d'inertie (26) avec un élément de levier prévu au niveau du cantilever (20) de telle sorte que le cantilever (20) est dévié.

14. Véhicule (2) selon la revendication 13, **caractérisé en ce que** le cantilever (20) est réalisé sous la forme d'un tuyau, dans lequel se trouve en tant qu'un élément de levier un rotor pouvant être déplacé dans le tuyau, monté sur ressorts sur deux côtés avec un élément de prise dépassant en direction du volant d'inertie (26) à travers un évidement du tuyau.

15. Véhicule (2) selon l'une quelconque des revendications précédentes, **caractérisé en ce que** le véhicule (2) présente au moins un dispositif de capteur et un système de commande et/ou de régulation servant à piloter l'au moins un dispositif de cueillette (7) afin de mettre en oeuvre un déclenchement automatique d'une opération de cueillette par le dispositif de cueillette (7).
